# EUROPÄISCHE PATENTSCHRIFT

(11) **EP 1 281 847 B1**
(45) Veröffentlichungstag und Bekanntmachung des Hinweises auf die Patenterteilung: **12.04.2006**
(21) Anmeldenummer: 02012137.2
(22) Anmeldetag: 01.06.2002
(51) Int. Cl.: F02D 9/10, F02D 11/10

(54) **Drosselklappeneinheit mit integrierter Drosselklappe**
Throttle valve unit with integrated throttle valve
Unité de vanne d'étranglement avec vanne d'étranglement intégrée

(30) Priorität: 02.08.2001 DE 10137771
(43) Veröffentlichungstag der Anmeldung: 05.02.2003
(73) Patentinhaber: ROBERT BOSCH GMBH, 70442 Stuttgart (DE)
(72) Erfinder: Schaefer, Wolfgang, 71723 Grossbottwar (DE); Michels, Markus, 70178 Stuttgart (DE); Josten, Stefan, 42897 Remscheid (DE)
(74) Vertreter: Hörschler, Wolfram Johannes

(56) Entgegenhaltungen:
- EP-A- 0 482 272
- EP-A- 0 947 681
- WO-A-97/04259
- DE-A- 19 854 594
- DE-U- 9 208 807
- DE-U- 9 209 797

## Beschreibung

### Technisches Gebiet

Bei Verbrennungskraftmaschinen kommen im Saugrohrtrakt Drosselverstellvorrichtungen zum Einsatz, mit denen das von der Verbrennungskraftmaschine benötigte Luftvolumen zur Verbrennung des Kraftstoffes reguliert werden kann. Die Drosselverstellvorrichtungen umfassen in der Regel einen Antrieb, die an einer Welle aufgenommenen Drosselklappe sowie ein zweiteiliges Drosselgehäuse, welches aus Metallguß gefertigt oder als Kunststoffspritzteil ausgebildet sein kann. Am Drosselgehäuse wird zudem vielfach ein separater Gehäusedeckel vorgesehen, mit welchem das Gehäuse zum Schutz gegen Ansaugen von Fremdluft abgedichtet werden kann.

### Stand der Technik

DE 43 29 522 A1 offenbart eine Drosseleinrichtung, welche im Ansaugkanal einer Brennkraftmaschine eingebaut werden kann. Die Drosseleinrichtung besteht aus einem Gehäuse einer Drosselklappenansteuerung, einem Stellungssensor, einer an einer Drosselklappenwelle befestigten Drosselklappe, wobei die Drosseleinrichtung zwischen dem reinluftseitigen Luftfilteranschluß und der Sauganlage der Brennkraftmaschine angeordnet ist. Der Luftfilteranschluß und/oder die Sauganlage bestehen aus einem Kunststoff und die einzelnen Elemente der Drosseleinrichtung sind modular aufgebaut und über Steck-, Schraub- oder Spannverbindungen miteinander fügbar. Gehäuse und/oder die Drosselklappe können aus Kunststoff bestehen, wobei die Drosselklappenwelle zweiteilig aufgebaut ist und auf einer Wellenhälfte das Modul für den Lagesensor und auf der anderen Wellenhälfte das Modul für die Drosselklappenverstelleinheit angeordnet sein kann. Stelleinheit, Stellensensor und Drosselklappe mit Drosselklappenwelle bilden eine gemeinsame Einheit, wobei das Gehäuse in den Luftfilteranschlußstutzen oder den Sauganlagenanschluß integriert sein kann.

WO 95/02493 A1 hat einen aus Kunststoff bestehenden Formkörper zum Gegenstand. Aus dieser Veröffentlichung ist ein aus Kunststoff bestehender, insbesondere im Spritzgußverfahren hergestellter Formkörper bekannt sowie ein Drosselklappengehäuse mit einer Wandung, die mit einer Innenwandfläche einen Hohlraum begrenzt. In der Wandung ist zumindest an der dem Hohlraum zugewandten Innenwandfläche ein vom Kunststoffmaterial bedecktes Einlegeteil angeordnet. Das Einlegeteil ist derart gegenüber der Normalebene geneigt, dass es zu einer im Hohlraum angeordneten schwenkbaren Drosselklappe, die zur Leistungssteuerung einer Brennkraftmaschine dient, in deren Leerlaufstellung fluchtend verläuft. Gemäß dieser Ausführung besteht das Einlegeteil aus Metall, beispielsweise einem Blech. Das Einlegeteil umfasst einen aus einer Ebene herausgebogenen Abschnitt und kann mit Verformungen, insbesondere mit das Einlegeteil durchsetzenden Öffnungen versehen werden.

DE 195 25 510 A1 bezieht sich auf eine Drosselklappenstelleinheit. Die Drosselklappenstelleinheit umfasst eine an einer in einem Drosselklappenstutzen drehbar gelagerten Drosselklappenwelle befestigte Drosselklappe. Ferner ist ein mit der Drosselklappenwelle gekoppelter, am Drosselklappenstutzen gelagerter Stellmotor zum Verstellen der Drosselklappenwelle vorgesehen. Dieser umfasst mindestens einen Schleifer und mindestens eine Potentiometerbahn zum Erfassen einer Stellposition der Drosselklappenwelle und einen elektrischen Anschluß, an den in einem Anschlußraum der Stellmotor und das Potentiometer angeschlossen sind. Ferner ist ein im Anschlußraum abschließendes Deckelelement vorgesehen. Die mindestens eine Potentiometerbahn ist am Deckel angebracht, wobei am Deckel ein zum elektrischen Anschluß gehörendes Kupplungsteil angeformt ist. Ferner ist am Deckel mindestens ein Kontakt ausgebildet, der bei an den Drosselklappenstutzen anmontierten Deckel im elektrischen Kontakt mit einem mit dem Stellmotor verbundenen Motorgegensteckkontakt steht.

Aus WO-A-97/04259 ist eine Drosselklappe bekannt, die in einem Stutzen drehbar angeordnet ist. Die Drosselklappe und der Stutzen werden im Zwei-Komponenten-Spritzgießverfahren hergestellt. Der Stutzen weist eine Progressionszone sowie Anlagebereiche auf, die mit der Drosselklappe eine Dichtzone bilden.

### Darstellung der Erfindung

Mit der erfindungsgemäß vorgeschlagenen Lösung läßt sich eine Drosselklappeneinheit in Mehrkomponententechnik als einfach zu handhabendes Bauteil fertigen. Die eigentliche Drosselklappe kann mit einem die Drosselklappenfläche umrandenden Rahmenteil unter Ausbildung einer Drosselklappenwelle als einstückiges Bauteil gefertigt werden. Die Enden der Drosselklappenwelle zwischen den Flügeln der Drosselklappenfläche lassen sich als Lagerzapfen in den geforderten Toleranzen fertigen, so dass eine beispielsweise als Werkzeug fallendes Drosselklappenbauteil ausgebildete Drosselklappeneinheit mit wenigen Handhabungsschritten in ein Drosselklappengehäuse eingelegt werden kann. Wird eine als werkzeugfallende, d.h. ohne Hinterschneidungen ausgebildete Drosselklappeneinheit in einem am Saugrohrtrakt ausgebildete untere Hälfte eines Drosselklappengehäuses eingelegt, lassen sich Montagezwischenschritte sowie Zerspanungsnacharbeiten einsparen.

Die unter Gehäusehälfte des Drosselklappengehäuses kann unmittelbar an einem ebenfalls als Kunststoffspritzgußteil gefertigten Ansaugtraktrohr einer Verbrennungskraftmaschine gestaltet sein, so dass sich der Montageschritt des Anbringens des Drosselklappengehäuses am Saugrohrtrakt an einer Verbrennungskraftmaschine, welcher eine Quelle möglicher Fehlluftansaugungen darstellen kann, erübrigt.

Zur Erfüllung der an die Drosselklappeneinheit gerichteten Anforderungen hinsichtlich Dichtheit und Robustheit, wird als Spritzgußmaterial für die Drosselklappenfläche sowie eventuell an diese angespritzte Komponenten sowie eine die Drosselklappenfläche umgebende Rahmenstruktur ein hochwertiger Kunststoff gewählt, um die erforderliche Schließgenauigkeit, das Beibehalten der Maßhaltigkeit sowie eine Temperaturbeständigkeit der Drosselklappeneinheit in allen Betriebszuständen einer Verbrennungskraftmaschine zu gewährleisten. Wird die Drosselklappeneinheit im Wege des Kunststoffspritzverfahrens gefertigt, kann sie als eine Einheit aus hochwertigem Material in einem Arbeitsgang gespritzt werden. Das geteilt ausgebildete Drosselklappengehäuse kann demgegenüber aus einem preiswerteren Kunststoff spritzgegossen werden, so dass die Menge des einzusetzenden hochwertigen Kunststoffes minimiert wird.

Bei Fertigung der Drosselklappeneinheit können nicht nur deren Lagerungselemente, d.h. die Lagerzapfen der Drosselklappenwelle in den geforderten Toleranzen maßhaltig gefertigt werden, sondern es lassen sich erforderlichenfalls auch Mitnehmer, Antriebszahnräder sowie Aufnahmeflächen bzw. Ausnehmungen für Sensorkomponenten in einem Arbeitsgang bei der Herstellung der Drosselklappeneinheit herstellen. Die aufgezählten Anbauten an der Drosselklappeneinheit können einerseits direkt an diese angespritzt werden, andererseits lassen sich diese Komponenten auch nachträglich an einer im Kunststoffspritzgießverfahren gefertigte Drosselklappeneinheit montieren.

Mit der erfindungsgemäß vorgeschlagenen Lösung lässt sich in einfacher Weise die Geometrie eines die Klappenfläche umgebenden Rahmens variieren, d.h. die Materialstärke des die Drosselklappenfläche umgebenden Rahmens und die davon abhängige Abdichtwirkung der Drosselklappeneinheit im Saugrohrtrakt einer Verbrennungskraftmaschine können an die kundenseitig geforderten Kriterien angepasst werden.

### Zeichnung

Anhand der Zeichnung wird die Erfindung nachstehend eingehender erläutert.

Es zeigt:
- Figur 1: eine Drosselklappeneinheit mit die Klappenflächenhälften umgebenden Rahmen und einer Drosselklappenwelle mit Lagerzapfen,
- Figur 2: einer Drosselklappenwelle gemäß der Darstellung in Figur 1 mit angespritztem Antriebselement,
- Figur 3: ein Drosselklappenelement gemäß der Darstellung in Figur 2, eingelegt in eine untere Drosselklappengehäusehälfte und
- Figur 4: die auf die untere Drosselklappengehäusehälfte aufgesetzte, die eingelegte Drosselklappeneinheit fixierende obere Gehäusehälfte eines Drosselklappengehäuses.

### Ausführungsvarianten

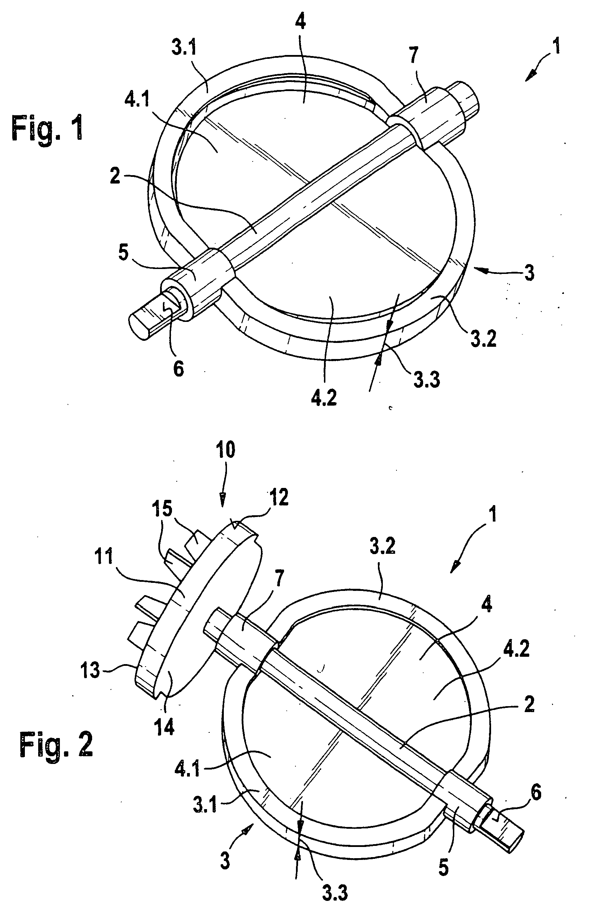

Der Darstellung gemäß Figur 1 ist eine Drosselklappeneinheit mit die Klappenflächenhälften umgebenden Rahmen sowie einer Drosselklappenwelle mit in deren Endbereichen ausgebildeten Lagerzapfen entnehmbar.

Die in Figur 1 dargestellte erste Ausführungsvariante einer Drosselklappeneinheit 1 ist als werkzeugfallende Variante hinterschneidungsfrei ausgebildet. Beidseits einer Klappenwelle 2 erstreckt sich eine Klappenfläche 4. Die Klappenfläche 4 ist symmetrisch zur Klappenwelle 2 angeformt und umfasst einen ersten Flügel 4.1 sowie einen zweiten Flügel 4.2. Die beiden Flügel 4.1 bzw. 4.2 der Klappenfläche 4 sind von einer Rahmenstruktur 3 umgeben. Die Rahmenstruktur 3 umfasst ein erstes Rahmenteil 3.1 sowie ein zweites Rahmenteil 3.2, welche in einer in Figur 1 dargestellten Rahmendicke 3.3 ausgebildet sind. Die Rahmendicke 3.3 der Rahmenstruktur 3 ist so bemessen, dass die Rahmenstruktur 3 beidseitig über die Drosselklappenfläche 4 erhaben hervorsteht. Das erste Rahmenteil 3.1 und das zweite Rahmenteil 3.2 besitzen etwa halbmondförmiges Aussehen und weisen im Bereich ihrer Übergangsstellen an einem ersten Lagerzapfen 5 sowie einem zweiten Lagerzapfen 7 Abflachungen auf.

Neben einer Ausbildung des ersten Rahmenteils 3.1 sowie des zweiten Rahmenteiles 3.2 in einer konstanten Rahmendicke 3.3 können die Rahmenteile 3.1 bzw. 3.2 auch mit einer über die Umfangsfläche des ersten Flügels 4.1 bzw. des zweiten Flügels 4.2 der Klappenfläche 4 unterschiedlichen Rahmendicke 3.3 ausgebildet werden. So kann es zur Versteifung der Klappenfläche 4 sinnvoll sein, die Rahmenstruktur 3 an den Übergangsstellen im Bereich der Lagerzapfen 5 bzw. 7 in einer größeren Rahmendicke 3.3 als in Figur 1 dargestellt, bei der Herstellung im Spritzgießwerkzeug auszubilden. Ebenso ist denkbar, die Rahmendicke 3.3 in dem Bereich, der am weitesten von der Wappenwelle 2 der Drosselklappeneinheit 1 gemäß der Darstellung in Figur 1 entfernt liegt, in einer minimalen Rahmendicke 3.3 auszubilden, was die Stelleigenschaften der Drosselklappeneinheit 1 bei deren Betätigung durch einen in Figur 1 nicht dargestellten vorzugsweise elektrischen Antrieb günstig beeinflusst.

An der als einstückiges Bauteil, vorzugsweise in zwei Komponentenspritzgießverfahren hergestellten aus hochwertigem Kunststoffmaterial spritzgegossenen Drosselklappeneinheit 1 sind in den Endbereichen der Klappenwelle 2 jeweils Lagerzapfen 5 bzw. 7 angeformt. Idealerweise bringt das Spritzgießwerkzeug so hohe Einstellkräfte auf, dass die werkzeugfallende Drosselklappeneinheit 1 gemäß der Darstellung in Figur 1 gradfrei hergestellt werden kann. Eine Nacharbeitung der Lagerzapfen 5 bzw. 7 erübrigt sich, wobei an einem am ersten Lagerzapfen 5 Aufnahmeflächen 6 angeformt werden können. Die Aufnahmeflächen 6 können einerseits Aufnahme von Sensorelementen dienen, mit denen die Drehlage der Drosselklappeneinheit 1 erfasst werden kann. Die Aufnahmeflächen 6 können ferner als Aufsteckfläche für in Figur 1 nicht dargestellte, separat zu montierende Antriebselemente wie z.B. Zahnräder oder Mitnehmer dienen.

Figur 2 zeigt eine weitere Ausführungsvariante einer einstückig gefertigten Drosselklappeneinheit gemäß Figur 1 mit angespritzten Antriebselementen.

Die im wesentlichen der Darstellung gemäß Figur 1 entsprechende Drosselklappeneinheit 1 gemäß Figur 2 umfasst im Bereich des zweiten Lagerzapfens 7 ein Antriebselement 10.

Das Antriebselement 10 kann bei der Herstellung der Drosselklappeneinheit 1 im Wege des Zweikomponentenspritzgießverfahrens unmittelbar an die Klappenwelle 2 angeformt, d.h. angespritzt werden. Das in Figur 2 dargestellte Antriebselement 10 ist als Scheibe 11 ausgebildet. Die Scheibe 11 umfasst eine erste Stirnseite 13 sowie eine der Klappenfläche 4 zuweisende zweite Stirnseite 14. An der ersten Stirnseite 13 werden beabstandet voneinander einzelne Vorsprünge 15 ausgebildet. Die Vorsprünge 15 dienen als Aufnahmen für Rückstellfedern, mit denen die Drosselklappeneinheit 1 in ihre Ausgangslage zurückgestellt werden kann. Anstelle der in Figur 2 am Antriebselement 10 angespritzten Vorsprünge 15 kann an der Umfangsfläche 12 des als Scheibe 11 konfigurierten Antriebselement auch eine Außenverzahnung angespritzt werden. Neben der in Figur 2 dargestellten Ausführungsvariante mit angespritztem Antriebselement 10 können an der Klappenwelle 2 der Drosselklappeneinheit 1 weitere Komponenten wie z.B. Mitnehmer oder ähnliches angespritzt werden.

Auch die in Figur 2 dargestellte vorzugsweise als einstückiges Bauelement im Wege des Zweikomponentenspritzgießverfahrens gefertigte Drosselklappeneinheit 1 umfasst eine Rahmenstruktur 3, welche den ersten Flügel 4.1 bzw. den zweiten Flügel 4.2 der Klappenfläche 4 etwa halbmondförmig gibt. Die Rahmendicke 3.3 des ersten Rahmenteiles 3.1 bzw. des zweiten Rahmenteiles 3.2 der Rahmenstruktur 3 kann - wie in Figur 2 dargestellt - konstant über den Radius des ersten Flügels 4.1 bzw. des zweiten Fügels 4.2 der Klappenfläche 4 beschaffen sein. Daneben ist analog zur Darstellung gemäß Figur 1 auch eine über den Umfang des ersten Flügels 4.1 bzw. des zweiten Flügels 4.2 variable Rahmendicke 3.3 möglich.

Im Bereich des ersten Lagerzapfens 5 der Klappenwelle 2 ist eine Aufnahmefläche 6 in Gestalt einer Abflachung angeformt, an welchem Sensorelemente oder aufschiebbare Antriebselemente mit der Klappenwelle 2 der Drosselklappeneinheit 1 gemäß Figur 2 in Verbindung treten können.

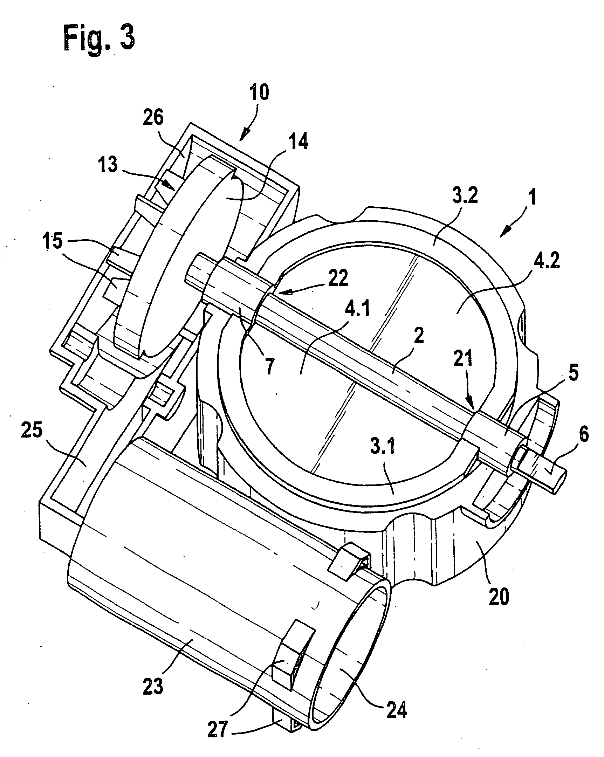

Figur 3 zeigt eine Drosselklappeneinheit gemäß der Darstellung in Figur 2 mit angespritztem Antriebselement, eingelegt in eine untere Gehäusehälfte einer Drosselvorrichtung.

Die ein in Figur 3 in perspektivischer Draufsicht wiedergegebene untere Gehäusehälfte 20 kann als ein separat im Ansaugtrakt einer Verbrennungskraftmaschine zu montierender Stutzen ausgebildet sein; ebensogut ist die Ausbildung der unteren Gehäusehälfte 20 als in den Ansaugtrakt einer Verbrennungskraftmaschien integrierte untere Gehäusehälfte einer Drosselvorrichtung möglich. Die erste Gehäusehälfte 20 umfasst eine erste Lagerungsstelle 21 und eine zweite Lagerungsstelle 22, in die der erste Lagerzapfen bzw. der zweite Lagerzapfen 7 der einstückig konfigurierten Drosselklappeneinheit 1 gemäß den Figuren 1 und 2 eingelegt werden. An der ersten Gehäusehälfte 20 ist ein hier zylindrisch ausgebildetes Antriebsgehäuse 23 angespritzt. Das Antriebsgehäuse 23 umschließt einen Hohlraum 24, in welchen ein hier nicht dargestellter - vorzugsweise elektrischer - Antrieb eingeschoben werden kann. Das Antriebsgehäuse 23 ist über einen Steg 25 mit einer ersten Aufnahmeschale 26 verbunden. Die erste Aufnahmeschale 26 umschließt einen Hohlraum in der ersten Drosselklappengehäusehälfte, der wiederum das an der Klappenwelle 2 angespritzte Antriebselement 10 nach außen abschirmt. Das Antriebselement 10 gemäß der Darstellung in Figur 3 umfasst eine erste Stirnseite 13 sowie eine zweite Stirnseite 14, wobei an der ersten Stirnseite 13 voneinander beabstandete, über den Umfang des Antriebselementes 10 verteilte, Vorsprünge 15 zur Aufnahme von Rückstellfedern ausgebildet sind.

Das einstückig gefertigte, vorzugsweise in zwei Komponenten-Spritzgießtechnik hergestellte, Drosselklappeneinheit 1 ist in Figur 3 in die Lagerungen 21, 22, die an der ersten Drosselklappengehäusehälfte ausgebildet sind, eingelegt. Eine maßhaltige Fertigung des ersten Lagerzapfens 5 bzw. des zweiten Lagerzapfens 7 macht eine weitere zerspanende Nacharbeit der Umfangsflächen Lagerzapfen 5 bzw. 7 überflüssig, so dass die Drosselklappeneinheit 1 unmittelbar nach der Entnahme aus dem Spritzgießwerkzeug in die erste Gehäusehälfte 20 einlegbar ist.

Der Vollständigkeit halber sei erwähnt, dass am Antriebsgehäuse 23 der ersten Gehäusehälfte 20 Verschlußelemente 27 ausgebildet sind, in welchen nach Einführen eines hier nicht dargestellten Antriebs in den Hohlraum 24 des Antriebsgehäuses 23 ein Verschlußelement verrastbar ist.

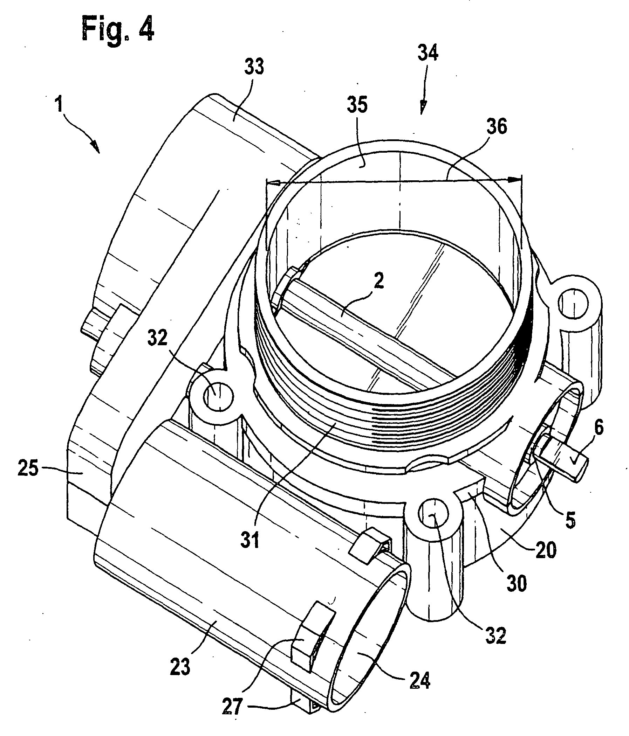

Der Darstellung gemäß Figur 4 ist die auf die erste Gehäusehälfte aufgebrachte, die eingelegte Drosselklappeneinheit fixierende zweite Gehäusehälfte des Drosselklappengehäuses zu entnehmen.

An der zweiten Gehäusehälfte 30 der Drosselvorrichtung ist eine obere Aufnahmeschale 33 angeformt, welche die in Figur 3 dargestellte, an der ersten Gehäusehälfte 20 angeformte untere Aufnahmeschale 26 verschließt, so dass das von den Aufnahmeschalen 26 bzw. 33 umschlossene Antriebselement 10 gegen die Umgebung abgedichtet ist. Beim Fügen der ersten und der Montage der zweiten Gehäusehälfte 30 auf die erste Gehäusehälfte 20 kann im Bereich der Stoßfuge der beiden Gehäusehälften 20, 30 ein Dichtelement an-geordnet sein, mit welchem eine Abdichtung der beiden Gehäusehälften 20, 30 gegeneinander möglich ist, so dass Fremdluftansaugung ausgeschlossen ist.

An der zweiten Gehäusehälfte 30 ist ein Formschlusselement 31 angeformt. Das Formschlusselement 31 befindet sich an der äußeren Mantelfläche eines Stutzens 34. Ein Luftführungsschlauch vom Luftfiltergehäuse lässt sich über das Formschlusselement 31 aufstülpen. Die Wandung 35 des Stutzens 34 weist einen Innendurchmesser 36 auf, welcher dem Querschnitt entspricht, der in der in Figur 4 dargestellten Position der einstückig gefertigten Drosselklappeneinheit 1 durch den ersten Flügel 4.1 bzw. den zweiten Flügel 4.2 der Klappenfläche 4 der Drosselklappeneinheit 1 verschlossen wird. Je nach Drehlage der Drosselklappeneinheit 1, welche durch eine im Antriebsgehäuse 23 aufnehmbaren Antrieb herbeigeführt wird, stellt sich ein entsprechender Durchfluß von zur Verbrennung in den Brennräumen einer Verbrennungskraftmaschine benötigter Luft ein. An der zweiten Drosselklappengehäusehälfte 30 sind Befestigungselemente angespritzt, die jeweils eine Durchgangsbohrung 32 umschließen. Durch die Durchgangsbohrung 32 sind Steckschrauben einführbar, mit welchen die Gehäusehälfte 20 bzw. 30 der Drosselvorrichtung zueinander dichtend fixiert werden. In der in Figur 4 dargestellten perspektivischen Draufsicht auf eine in einem zweiteiligen Gehäuse, die Gehäusehälften 20 und 30 umfassend, montierten Drosselklappeneinheit 1, ragt der an der Klappenwelle 2 angeformte erste Lagerzapfen 5 mit daran ausgebildeter als Abflachung beschaffener Aufnahmefläche 6 seitlich aus dem Gehäuse heraus. An der Aufnahmefläche 6 am ersten Lagerzapfen 5 können Sensorelemente plaziert werden, mit welchen die Drehlage der Drosselklappeneinheit 1 relativ zum Innendurchmesser 36 des Stutzens 34 erfasst werden kann. Da die einstückige Drosselklappeneinheit 1 ein Bauteil darstellt, ist über ein an der Aufnahmefläche 6 vorzusehendes Sensorelement die Drehlage der Klappenfläche 4 bzw. des ersten Flügels 4.1 und des zweiten Flügels 4.2 innerhalb des Innendurchmessers 36 des Stutzens 34 mit hoher Genauigkeit detektierbar.

Durch die einstückige Ausbildung der Drosselklappeneinheit 1 - sei es als werkzeugfallendes Bauteil gemäß der Darstellung in Figur 1 bzw. als Anbauten aufweisende Drosselklappeneinheit 1 gemäß der Darstellung in Figur 2 - kann dieses Bauelement in einem separaten Arbeitsgang durchgängig aus einem höherwertigen Kunststoff hergestellt werden, im Vergleich zu dem Kunststoffmaterial, aus welchem die erste Gehäusehälfte 20 bzw. die zweite Gehäusehälfte 30 gefertigt wird. Damit lassen sich Materialkosten einsparen. Ferner gestattet die einstückige, maßhaltige Fertigung der Drosselklappeneinheit 1 einen Verzicht auf Zwischenmontageschritte sowie auf Nacharbeiten z.B. eine Entgratung. Die werkzeugfallende Drosselklappeneinheit 1 kann unmittelbar in die erste Ge-häusehälfte 20 eingelegt werden, in welcher sie durch Montage der zweiten Gehäusehälfte 30 in ihrer Einbaulage fixiert und dauerhaft gehalten wird.

### Bezugszeichenliste

- 1: Drosselklappeneinheit
- 2: Klappenwelle
- 3: Rahmenstruktur
- 3.1: erstes Rahmenteil
- 3.2: zweites Rahmenteil
- 3.3: Rahmendicke
- 4: Klappenfläche
- 4.1: erster Flügel
- 4.2: zweiter Flügel
- 5: erster Lagezapfen
- 6: Aufnahmefläche
- 7: zweiter Lagerzapfen

- 10: Antriebselement
- 11: Scheibe
- 12: Umfang
- 13: erste Stirnseite
- 14: zweite Stirnseite
- 15.: Vorsprung

- 20: erste Drosselklappengehäusehälfte
- 21: erste Lagerung
- 22: zweite Lagerung
- 23: Antriebsgehäuse
- 24: Hohlraum
- 25: Steg
- 26: untere Aufnahmeschale
- 27: Verschlußelemente

- 30: zweite Drosselklappengehäusehälfte
- 31: Formschlusselement
- 32: Durchgangsbohrung
- 33: obere Aufnahmeschale
- 34: Stutzen
- 35: Wandung
- 36: Innendurchmesser

## Patentansprüche

1. Verfahren zur Herstellung einer Drosselvorrichtung mit einer Drosselklappeneinheit (1), die in einem zwei Gehäusehälften (20, 30) umfassenden Drosselgehäuse aufgenommen ist, an welchem ein Aufnahmegehäuse (23) für einen die Drosselklappeneinheit (1) betätigenden Stellantrieb angeformt ist, wobei die Drosselklappeneinheit (1) im Spritzgießverfahren in einem Arbeitsgang einstückig unter Ausbildung einer Rahmenstruktur (3; 3.1, 3.2) gefertigt wird, die eine Klappenfläche (4; 4.1, 4.2) beidseits einer Lagerelemente (5, 7) aufweisenden Klappenwelle (2) umgibt, **dadurch gekennzeichnet, dass** die Rahmenstruktur (3) am Umfang der Klappenfläche (4) in variabler Rahmendicke (3) angeformt wird.

2. Verfahren gemäß Anspruch 1, **dadurch gekennzeichnet, dass** die Drosselklappeneinheit (1) in Zwei-Komponententechnik in einem Arbeitsgang aus höherwertigem Material gefertigt wird.

3. Verfahren gemäß Anspruch 1, **dadurch gekennzeichnet, dass** die Gehäusehälften (20, 30) der Drosselvorrichtung aus einem kostengünstigen Material gefertigt sind.

4. Verfahren gemäß Anspruch 1, **dadurch gekennzeichnet, dass** die Drosselklappeneinheit (1) als Werkzeug fallendes Werkstück hinterschneidungsfrei gefertigt wird.

5. Verfahren gemäß Anspruch 1, **dadurch gekennzeichnet, dass** an die Klappenwelle (2) der Drosselklappeneinheit (1) Anbauten (10) und/oder Aufnahmeflächen (6) angeformt werden.

6. Verfahren gemäß Anspruch 5, **dadurch gekennzeichnet, dass** an der Klappenwelle (2) im Bereich der Lagerelemente (5, 7) Antriebselement (10) und/oder Drehgeber (15) angeformt sind.

7. Verfahren gemäß Anspruch 6, **dadurch gekennzeichnet, dass** an der Klappenwelle (2) im Bereich der Lagerelemente (5, 7) Aufnahmeflächen (6) für Sensorelemente angeformt werden.

8. Verfahren gemäß Anspruch 1, **dadurch gekennzeichnet, dass** die in die erste Gehäusehälfte (20) eingelegte Drosselklappeneinheit (1) durch die Montage der zweiten Gehäusehälfte (30) in Lagerungen (21, 22) fixiert wird.

9. Verfahren gemäß Anspruch 1, **dadurch gekennzeichnet, dass** an einer der Gehäusehälften (20, 30) das den Stellantrieb aufnehmende Aufnahmegehäuse (23) so angespritzt wird, dass dessen Längsachse parallel zur Klappenwelle (2) der Drosselklappeneinheit (1) liegt.

10. Verfahren gemäß Anspruch 5, **dadurch gekennzeichnet, dass** an der Klappenwelle (2) als Zahnräder oder Mitnehmer gestaltete Antriebskomponenten angeformt werden.

## Claims

1. Method for producing a throttle device with a throttle valve unit (1), which is received in a throttle housing which comprises two housing halves (20, 30) and on which there is formed a receiving housing (23) for an actuating drive operating the throttle valve unit (1), the throttle valve unit (1) being produced in one piece in a single operation by the injection-moulding process, thereby forming a frame structure (3; 3.1, 3.2), which surrounds a valve surface (4; 4.1, 4.2) on both sides of a valve shaft (2) having bearing elements (5, 7), **characterized in that** the frame structure (3) is formed on the periphery of the valve surface (4) with a variable frame thickness (3).

2. Method according to Claim 1, **characterized in that** the throttle valve unit (1) is produced from higher-grade material in one operation by a two-component technique.

3. Method according to Claim 1, **characterized in that** the housing halves (20, 30) of the throttle device are produced from a low-cost material.

4. Method according to Claim 1, **characterized in that** the throttle valve unit (1) is produced as a workpiece straight from the mould without any undercuts.

5. Method according to Claim 1, **characterized in that** attachments (10) and/or receiving surfaces (6) are formed onto the valve shaft (2) of the throttle valve unit (1).

6. Method according to Claim 5, **characterized in that** drive elements (10) and/or rotary encoders (15) are formed on the valve shaft (2) in the region of the bearing elements (5, 7).

7. Method according to Claim 6, **characterized in that** receiving surfaces (6) for sensor elements are formed on the valve shaft (2) in the region of the bearing elements (5, 7).

8. Method according to Claim 1, **characterized in that** the throttle valve unit (1) placed in the first housing half (20) is fixed by the mounting of the second housing half (30) in bearing arrangements (21, 22).

9. Method according to Claim 1, **characterized in that** the receiving housing (23) receiving the actuating drive is moulded onto one of the housing halves (20, 30) in such a way that its longitudinal axis lies parallel to the valve shaft (2) of the throttle valve unit (1).

10. Method according to Claim 5, **characterized in that** drive components designed as gear wheels or drivers are formed on the valve shaft (2).

## Revendications

1. Procédé de fabrication d'un dispositif d'étranglement comprenant un volet d'étranglement (1), logé dans un boîtier d'étranglement comprenant deux moitiés de boîtier (20, 30), et sur lequel est formé un boîtier de réception (23) pour un actionneur actionnant le volet d'étranglement (1), volet fabriqué d'une seule pièce selon un procédé de moulage par injection en une seule étape en formant une structure-cadre (3 ; 3.1, 3.2) qui entoure une surface de volet (4 ; 4.1, 4.2) des deux côtés d'un axe de volet (2) présentant des éléments de palier (5, 7),
**caractérisé en ce qu'**
à la périphérie de la surface de volet (4) la structure-cadre (3) est formée avec une épaisseur de cadre (3) variable.

2. Procédé selon la revendication 1,
**caractérisé en ce que**
le volet d'étranglement (1) est fabriqué en une seule étape, selon une technique à deux composants, à partir d'un matériau de haute qualité.

3. Procédé selon la revendication 1,
**caractérisé en ce que**
les moitiés de boîtier (20, 30) du dispositif d'étranglement sont fabriquées à partir d'un matériau peu coûteux.

4. Procédé selon la revendication 1,
**caractérisé en ce que**
le volet d'étranglement (1) est fabriqué sans contre-dépouille en tant que pièce formant outil.

5. Procédé selon la revendication 1,
**caractérisé en ce qu'**
on forme des ajouts (10) et/ou des surfaces de réception (6) sur l'axe (2) du volet d'étranglement (1).

6. Procédé selon la revendication 5,
**caractérisé en ce qu'**
on forme un élément d'entraînement (10) et/ou un capteur de rotation (15) sur l'axe de volet (2) dans la zone des éléments de palier (5, 7).

7. Procédé selon la revendication 6,
**caractérisé en ce qu'**
on forme des surfaces de réception (6) pour des éléments de détection sur l'axe de volet (2) dans la zone des éléments de palier (5, 7).

8. Procédé selon la revendication 1,
**caractérisé en ce que**
le volet d'étranglement (1) introduit dans la première moitié de boîtier (20) est fixé par le montage de la deuxième moitié de boîtier (30) dans des paliers (21, 22).

9. Procédé selon la revendication 1,
**caractérisé en ce que**
sur l'une des moitiés de boîtier (20, 30), le boîtier de réception (23) recevant l'actionneur est moulé par injection de sorte que son axe longitudinal est parallèle à l'axe (2) du volet d'étranglement (1).

10. Procédé selon la revendication 5,
**caractérisé en ce qu'**
on forme sur l'axe de volet (2)des composants d'entraînement tels que des roues dentées ou des éléments d'entraînement.
